(19)

Europäisches Patentamt
European Patent Office
Office européen des brevets

(11) **EP 2 860 549 B1**

(12) **EUROPEAN PATENT SPECIFICATION**

(45) Date of publication and mention
of the grant of the patent:
**05.07.2017 Bulletin 2017/27**

(51) Int Cl.:
***G01S 13/90*** (2006.01)

(21) Application number: **14169310.1**

(22) Date of filing: **21.05.2014**

(54) **METHOD AND DEVICE FOR DIRECTION OF ARRIVAL (DOA) DETECTION OF SAR SIGNALS**

VERFAHREN UND VORRICHTUNG ZUR ERKENNUNG DER EINFALLSRICHTUNG VON SAR SIGNALEN

PROCÉDÉ ET DISPOSITIF DE DÉTECTION DE LA DIRECTION D'ARRIVÉE DE SIGNAUX RSO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2013 CN 201310475827**

(43) Date of publication of application:
**15.04.2015 Bulletin 2015/16**

(73) Proprietor: **Institute of Electronics, Chinese Academy of
Sciences
Beijing 100190 (CN)**

(72) Inventors:
• **Deng, Yunkai**
  **100190 Beijing (CN)**
• **Wang, Yu**
  **100190 Beijing (CN)**
• **Zhang, Zhimin**
  **100190 Beijing (CN)**
• **Yu, Weidong**
  **100190 Beijing (CN)**
• **Zhao, Fengjun**
  **100190 Beijing (CN)**
• **Wang, Wei**
  **100190 Beijing (CN)**
• **Guo, Lei**
  **100190 Beijing (CN)**
• **Wang, Chunle**
  **100190 Beijing (CN)**

(74) Representative: **Gulde & Partner
Patent- und Rechtsanwaltskanzlei mbB
Wallstraße 58/59
10179 Berlin (DE)**

(56) References cited:
• **BORDONI F ET AL: "Adaptive scan-on-receive based on spatial spectral estimation for high-resolution, wide-swath Synthetic Aperture Radar", GEOSCIENCE AND REMOTE SENSING SYMPOSIUM,2009 IEEE INTERNATIONAL,IGARSS 2009, IEEE, PISCATAWAY, NJ, USA, 12 July 2009 (2009-07-12), pages I-64-I-67, XP031630653, ISBN: 978-1-4244-3394-0**
• **F BORDONI ET AL: "PERFORMANCE INVESTIGATION ON SCAN-ON-RECEIVE AND ADAPTIVE DIGITAL BEAM-FORMING FOR HIGH-RESOLUTION WIDE-SWATH SYNTHETIC APERTURE RADAR", 2009 INTERNATIONAL ITG WORKSHOP ON SMART ANTENNAS - WSA 2009, 1 February 2009 (2009-02-01), pages 114-121, XP055173699,**
• **FAN FENG ET AL: "An Improved Scheme of Digital Beam-forming on Elevation for Spaceborne SAR", JOURNAL OF ELECTRONICS & INFORMATION TECHNOLOGY, vol. 33, no. 6, 13 July 2011 (2011-07-13), pages 1465-1470, XP055172794, ISSN: 1009-5896, DOI: 10.3724/SP.J.1146.2010.01176**

**Description**

**TECHNICAL FIELD**

The disclosure relates to the field of Synthetic Aperture Radar (SAR), and in particular to a method and device for detecting a Direction of arrival (DOA).

**BACKGROUND**

SAR refers to a high-resolution active microwave imaging radar capable of acquiring a high range and azimuth resolution using a short antenna. Digital Beam Forming (DBF) receiving technology is very valuable in implementing higher resolution and wider swath of SAR; DOA detection in DBF is crucial to a DBF result. Therefore, accurate DOA detection is of great significance for the DBF receiving technology.

At present, dominating DOA detection technologies are all implemented based on statistics methods, and mainly include a beam-former algorithm, a capon algorithm, and a Multiple Signal Classification (MUSIC) algorithm. Generally, the capon algorithm and the MUSIC algorithm give high detection precision; however, all three algorithms require massive data for statistical analysis, leading to huge amount of computation, which hampers realistic project implementation.

In addition, in realistic DOA detection, different topographic heights of targets often cause a pointing/steering error, thereby deviating the DOA detection and reducing an SAR receiving gain.

Therefore, there is an urgent need for a solution for accurate and fast DOA detection while minimizing amount of computation and overcoming impact of the topographic height of a target at the same time.

BORDONI F et. al.: "Adaptive scan-on-receive based on spatial spectral estimation for high-resolution, wide-swath Synthetic Aperture Radar" (Geoscience and Remote Sensing Symposium, 2009 IEEE International, IGARSS 2009, IEEE, PISCATAWAY, NJ, USA, 12 July 2009, pages I-64 - I-67) investigates the possibility of applying direction of arrival estimation methods to spaceborne SMART SAR systems, that employ receive beam steering and proposes a new algorithm based on the actual spatial distribution of the received signal power. The performance of the algorithm is evaluated by Monte Carlo simulations and compared with that of the conventional scan-on-receive approach, in different operational scenarios. The Cramer Rao Lower Bound is also reported as a benchmark on the performance.

F BORDONI et. al.:"PERFORMANCE INVESTIGATION ON SCAN-ON-RECEIVE AND ADAPTIVE DIGITAL BEAM-FORMING FOR HIGH-RESOLUTION WIDE-SWATH SYNTHETIC APERTURE RADAR" (2009 International ITG Workshop on Smart Antennas - WSA 2009, 1 February 2009, pages 114-121) investigates the performance of the Smart Multi-Aperture Radar Technique (SMART) Synthetic Aperture Radar (SAR) system for high-resolution wide-swath imaging based on Scan-on-Receive (SCORE) algorithm for receive beam steering. SCORE algorithm works under model mismatch conditions in presence of topographic height. A study on the potentiality of an adaptive approach for receive beam steering based on spatial spectral estimation is presented. The impact of topographic height on SCORE performance in different operational scenarios is examined, with reference to a realistic SAR system. The SCORE performance is compared to that of the adaptive approach by using the Cramèr Rao lower bound analysis.

FAN FENG et. al.: "An Improved Scheme of Digital Beam-forming on Elevation for Spaceborne SAR" (JOURNAL OF ELECTRONICS & INFORMATION TECHNOLOGY, vol. 33, no. 6, 13 July 2011, pages 1465-1470) analyzes the impulse response of the elevation channel according to the geometric relationship among multiple channels on elevation, and derives the explicit expression of it. Based on this, FAN FENG et. al. proposes a DBF processing scheme which combines the time-variant weighting and Finite Impulse Response (FIR) filtering, and further presents the block diagram of system realization. Compared with other DBF methods, this approach can maximize the receive gain and optimize the system performance for the long pulse, without increasing the complexity of the digital beam-former hardware. Simulation results indicate that it allows the system to achieve the theoretically optimal performance.

**SUMMARY**

It is desired that embodiments of the disclosure provide a method and device for DOA detection, capable of reducing amount of computation in DOA detection and overcoming impact of the topographic height of a target on DOA detection.

A technical solution of the disclosure is implemented as follows.

An embodiment of the disclosure provides a method for detecting a Direction of Arrival, DOA of an echo in a Synthetic Aperture Radar, SAR, comprising the steps of:

performing range pulse compression on echo data obtained by each channel of the SAR in elevation to obtain a compressed SAR signal;

performing Fourier transform on the compressed SAR signal along the channel on each range gate; interpolating a result obtained after the Fourier transform with a frequency-domain interpolation algorithm; acquiring a frequency at an amplitude maximum in a frequency domain after the interpolation; and acquiring the DOA according to the frequency,

In this embodiment, the compressed SAR signal is $\hat{g}_n(\tau,t)$, with

$$\hat{g}_n(\tau,t) = \sigma p_r(t - t_0)\exp\left[-j\frac{4\pi}{\lambda}R_T(\tau)\right]\exp\left[j\frac{2\pi}{\lambda}d_n\sin\alpha(t_0)\right]$$

, wherein $\tau$ is an azimuth slow time; $t$ is a range fast time; $\sigma$ is a backscattering coefficient of a target; $p_r(t-t_0)$ is a point target SAR signal envelope after pulse compression; $t_0$ is a two-way delay of the echo; $R_T(\tau)$ is an instantaneous slant range from a transmitter to the target; $\alpha(t_0)$ is the off-boresight angle of the DOA; $d_n$ is a position of an nth receiver with respect to the transmitter, an absolute value of $d_n$ being equal to a distance between the nth receiver and the transmitter; $\lambda$ is a wavelength of the echo,

In this embodiment, the step of performing (102) Fourier transform on the compressed SAR signal along the channel on each range gate comprises:

deleting, on a fixed range gate, a common term of channels of the SAR to obtain an N-dimensional vector $v(n)$, with

$$v(n) = \exp\left[j\frac{2\pi}{\lambda}d_n\sin\alpha(t_0)\right];$$

and

transforming the $v(n)$ into the frequency domain to obtain the result $\Gamma(\xi)$, with

$$\Gamma(\xi) = \int_0^{L_E}\exp\left\{j2\pi\frac{\sin[\alpha(t_0)]}{\lambda}d_n\right\}\exp[-j2\pi\xi d_n]d(d_n) = \mathrm{sinc}\left\{L_E\left[\xi - \frac{\sin[\alpha(t_0)]}{\lambda}\right]\right\}\exp[-j\pi\xi L_E]$$

, wherein $L_E$ is an azimuth antenna length; $\xi$ is a frequency-domain parameter, In this embodiment, the step of acquiring (103) the DOA according to the frequency is:

acquiring the off-boresight angle $\alpha(t_0)$, with $\alpha(t_0) = arc\sin(\lambda\xi_{max})$, wherein $\xi_{max}$ is the frequency at the amplitude maximum in the frequency domain after the interpolation.

In an embodiment, the frequency at the amplitude maximum in the frequency domain after the interpolation is $\xi_{max}$, with $\xi_{max} = \dfrac{\sin[\alpha(t_0)]}{\lambda}$ .

In an embodiment, a frequency range of $\Gamma(\xi)$ is: $\xi \in \left[-\dfrac{1}{2d}, \dfrac{1}{2d}\right]$, wherein $d$ is a spacing between two adjacent receiving channels of the SAR.

In an embodiment, an absolute value of the off-boresight angle of the DOA is less than $arc\sin\left(\dfrac{\lambda}{2d}\right)$, wherein $d$ is a spacing between two adjacent receiving channels of the SAR.

In an embodiment, the method may further include steps of: acquiring a weight $\hat{w}_n(t)$ of a current range gate of each channel of the SAR according to the off-boresight angle of the DOA, with

$$\hat{w}_n(t) = \exp[-2\pi d_n\xi_{max}]$$

, wherein $d_n$ is a position of an nth receiver with respect to a transmitter, an absolute value of $d_n$ being equal to a distance between the nth receiver and the transmitter, and $\xi_{max}$ is the frequency at the amplitude maximum in the frequency domain after the interpolation; and
performing DBF according to the weight $\hat{w}_n(t)$.

In an embodiment, the step of performing DBF according to the weight $\hat{w}_n(t)$ is:

performing weighted summation on the compressed SAR signal $\hat{g}_n(\tau,t)$ with the weight $\hat{w}_n(t)$ of each channel of the SAR, to obtain a SAR signal $G(\tau,t)$ formed after the DBF, with

$$G(\tau,t) = \sum_{n=1}^{N} \hat{w}_n(t) \cdot \hat{g}_n(\tau,t)$$

, wherein $\tau$ is an azimuth slow time, $t$ is a range fast time.

The disclosure further provides a device for detecting a Direction of Arrival (DOA), including: a pulse compression module, a Fourier transform module, an interpolation module and a DOA acquisition module, wherein
the pulse compression module is configured to perform range pulse compression on echo data obtained by each channel of the SAR in elevation to obtain a compressed SAR signal;
the Fourier transform module is configured to perform Fourier transform on the compressed SAR signal along the channel on each range gate;
the interpolation module is configured to interpolate a result obtained after the Fourier transform with a frequency-domain interpolation algorithm; and
the DOA acquisition module is configured to acquire a frequency at an amplitude maximum in a frequency domain after the interpolation, and to acquire the DOA according to the frequency,

In this embodiment, the compressed SAR signal is $\hat{g}_n(\tau,t)$, with

$$\hat{g}_n(\tau,t) = \sigma p_r(t - t_0)\exp\left[-j\frac{4\pi}{\lambda}R_T(\tau)\right]\exp\left[j\frac{2\pi}{\lambda}d_n\sin\alpha(t_0)\right]$$

, wherein $\tau$ is an azimuth slow time; $t$ is a range fast time; $\sigma$ is a backscattering coefficient of a target; $p_r(t-t_0)$ is a point target SAR signal envelope after pulse compression; $t_0$ is a two-way delay of the echo; $R_T(\tau)$ is an instantaneous slant range from a transmitter to the target; $\alpha(t_0)$ is the off-boresight angle of the DOA; $d_n$ is a position of an nth receiver with respect to the transmitter, an absolute value of $d_n$ being equal to a distance between the nth receiver and the transmitter; $\lambda$ is a wavelength of the echo,

In this embodiment, the Fourier transform module is further configured to:

delete, on a fixed range gate, a common term of channels of the SAR to obtain an N-dimensional vector $v(n)$, with

$$v(n) = \exp\left[j\frac{2\pi}{\lambda}d_n\sin\alpha(t_0)\right];$$

and transform the $v(n)$ into the frequency domain to obtain the result $\Gamma(\xi)$, with

$$\Gamma(\xi) = \int_0^{L_E}\exp\left\{j2\pi\frac{\sin[\alpha(t_0)]}{\lambda}d_n\right\}\exp[-j2\pi\xi d_n]d(d_n) = \sin c\left\{L_E\left[\xi - \frac{\sin[\alpha(t_0)]}{\lambda}\right]\right\}\exp[-j\pi\xi L_E]$$

, wherein $L_E$ is an azimuth antenna length; $\xi$ is a frequency-domain parameter,

In this embodiment, the DOA acquisition module is further configured to:

acquire the off-boresight angle $\alpha(t_0)$, with $\alpha(t_0) = arc\sin(\lambda\xi_{max})$, wherein $\xi_{max}$ is the frequency at the amplitude maximum in the frequency domain after the interpolation.

In an embodiment, the device may further comprise a weight acquisition module, wherein
the weight acquisition module is configured to acquire a weight of a current range gate of each channel of the SAR according to the off-boresight angle of the DOA, with

$$\widehat{w}_n(t) = \exp\left[-2\pi d_n \xi_{max}\right].$$

In an embodiment, the device may further comprise a beam forming module, wherein the beam forming module is configured to:

perform weighted summation on the compressed SAR signal $\hat{g}_n(\tau,t)$ with the weight $\hat{w}_n(t)$ of each channel of the SAR, to obtain a SAR signal $G(\tau,t)$ formed after the DBF, with

$$G(\tau,t) = \sum_{n=1}^{N} \widehat{w}_n(t) \cdot \widehat{g}_n(\tau,t)$$

, wherein $\tau$ is an azimuth slow time, $t$ is a range fast time.

With the method and device for DOA detection provided by the embodiments of the disclosure, range pulse compression is performed on echo data obtained by each channel in elevation to obtain a compressed signal; Fourier transform is performed on the compressed signal along the channel on each range gate; a result obtained after the Fourier transform is interpolated; a frequency at an amplitude maximum in a frequency domain after the interpolation is acquired; and a DOA can be acquired according to the frequency. With this solution, amount of computation in DOA detection can be reduced while overcoming impact of the topographic height of a target on DOA detection.

## BRIEF DESCRIPTION OF THE DRAWINGS

Fig.1 is a flowchart of a method for DOA detection provided by an embodiment of the disclosure;

Fig.2 is a diagram of a structure of a device for DOA detection provided by an embodiment of the disclosure;

Fig.3 is a diagram of result comparison of Experiment 1 provided by an embodiment of the disclosure;

Fig.4 is a diagram of result comparison of Experiment 2 provided by an embodiment of the disclosure; and

Fig.5 is a diagram of result comparison of Experiment 3 provided by an embodiment of the disclosure.

## DETAILED DESCRIPTION

In embodiments of the disclosure, range pulse compression is performed on echo data obtained by each channel in elevation to obtain a compressed signal; Fourier transform is performed on the compressed signal along the channel on each range gate; a result obtained after the Fourier transform is interpolated; a frequency at an amplitude maximum in a frequency domain after the interpolation is acquired; and a DOA is acquired according to the frequency..

The disclosure is further elaborated below with reference to drawings and specific embodiments.

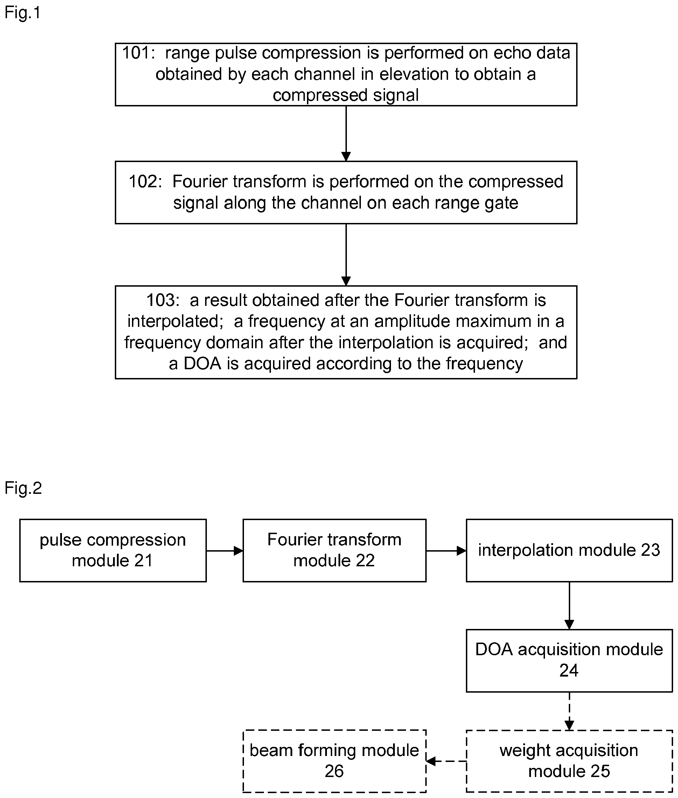

An embodiment of the disclosure implements a method for DOA detection. As shown in Fig.1, the method includes steps as follows.

In step 101, range pulse compression is performed on echo data obtained by each channel in elevation to obtain a compressed signal.

In an embodiment, the echo data may by generated as follows: after a radar transmits a pulse signal, an array of receivers uniformly arranged in elevation receive an echo signal; and after entering each receiver, the echo signal is subject to processing by a low-noise amplifier, mixing, and AD sampling before the echo data are generated.

In an embodiment, the signal obtained after range pulse compression is performed on the echo data obtained by each channel in elevation is as follows:

$$\widehat{g}_n(\tau,t) = \sigma p_r(t - t_0)\exp\left[-j\frac{4\pi}{\lambda}R_T(\tau)\right]\exp\left[j\frac{2\pi}{\lambda}d_n\sin\alpha(t_0)\right] \tag{1}$$

, where $\tau$ is an azimuth slow time, $t$ is a range fast time, $\sigma$ is a backscattering coefficient of a target, $p_r(t-t_0)$ is a point target signal envelope after pulse compression, $t_0$ is a two-way delay of the echo, $R_T(\tau)$ is an instantaneous slant range from a transmitter (transmitting antenna) to the target, $\alpha(t_0)$ is the off-boresight angle of the DOA, i.e., the DOA to be detected in an embodiment of the disclosure, $d_n$ is a position of an nth receiver (receiving antenna) with respect to the transmitter, the absolute value of $d_n$ being equal to the distance between the nth receiver and the transmitter, $\lambda$ is a wavelength.

In a realistic application, a specific parameter in Formula (1) is related to a parameter of the radar pulse and a geometric relationship between the radar and the target.

In an embodiment, such data may be processed by a signal processor inside a SAR system; or may be sent by the SAR to a ground receiving station through a broadband data link before being processed in a signal processor in the ground receiving station.

In step 102, Fourier transform is performed on the compressed signal along the channel on each range gate.

In step 102, Fourier transform may be performed on the compressed signal along the channel on each range gate specifically as follows: a common term of channels is deleted on a fixed range gate, such that an N-dimensional vector $v(n)$ may be obtained, specifically with

$$v(n) = \exp\left[j\frac{2\pi}{\lambda}d_n\sin\alpha(t_0)\right] \tag{2}$$

, where $t_0$ is a two-way delay of the echo, $\alpha(t_0)$ is the off-boresight angle of the DOA, i.e., the DOA to be detected by an embodiment of the disclosure, $d_n$ is a position of an nth receiver with respect to a transmitter, the absolute value of $d_n$ being equal to the distance between the nth receiver and the transmitter, and $\lambda$ is a wavelength;

and the N-dimensional vector is transformed into the frequency through Fourier transform to obtain result $\Gamma(\xi)$, with

$$\Gamma(\xi) = \int_0^{L_E}\exp\left\{j2\pi\frac{\sin[\alpha(t_0)]}{\lambda}d_n\right\}\exp[-j2\pi\xi d_n]d(d_n) = \sin c\left\{L_E\left[\xi - \frac{\sin[\alpha(t_0)]}{\lambda}\right]\right\}\exp[-j\pi\xi L_E] \tag{3}$$

, where $L_E$ is an azimuth antenna length, $\xi$ is a frequency-domain parameter, $t_0$ is a two-way delay of the echo, $\alpha(t_0)$ is the off-boresight angle of the DOA, i.e., the DOA to be detected by an embodiment of the disclosure, $d_n$ is a position of an nth receiver with respect to the transmitter, the absolute value of $d_n$ being equal to the distance between the nth receiver and the transmitter, and $\lambda$ is a wavelength.

Specific implementation of the step of performing Fourier transform on the compressed signal along the channel on each range gate is introduced below via a specific example.

Assume that there are 10 receiving channels in range, and signals obtained after pulse compression of data obtained in a receiving window are S1(t), S2(t),..., S10(t) respectively, the signals of the 10 channels are written into a matrix as follows

$$S_{matri}(t) = \begin{bmatrix} S_1(t) \\ S_2(t) \\ \vdots \\ S_{10}(t) \end{bmatrix} \tag{4}$$

In an embodiment, in performing Fourier transform on the compressed signal along the channel on each range gate, Fast Fourier Transform (FFT) of a Discrete Fourier transform (DFT) algorithm can be employed to perform FFT of 10 points on each column of the matrix $S_{matri}(t)$.

In step 103, a result obtained after the Fourier transform is interpolated; a frequency at an amplitude maximum in a frequency domain after the interpolation is acquired; and a DOA is acquired according to the frequency.

In Step 102, after Fourier transform is performed (along the channel on the same range gate) on the signal of the N channels obtained after pulse compression through formula (3), it is easy to know that the range of the frequency-domain parameter $\xi$ of $\Gamma(\xi)$ is as follows:

$$\xi \in \left[ -\frac{1}{2d}, \frac{1}{2d} \right] \tag{5}$$

, where $d$ is a spacing between two adjacent receiving channels.

It may be observed according to Formula (3) that $\Gamma(\xi)$ is maximal when $\xi = \xi_{\max} = \dfrac{\sin[\alpha(t_0)]}{\lambda}$ (6), where $\lambda$ is the wavelength, and $\alpha(t_0)$ is the off-boresight angle of the DOA, i.e., the DOA to be detected by an embodiment of the disclosure. After the frequency-domain result obtained after Fourier transform is interpolated, the frequency-domain parameter corresponding to the amplitude maximum in the frequency domain can be obtained; and the receiving direction maximizing the receiving gain $\alpha(t_0)$ (i.e., the DOA) can be obtained according to the frequency-domain parameter; specifically, $\sin[\alpha(t_0)] = \lambda \xi_{\max}$ can be obtained according to formula (6); the DOA $\alpha(t_0)$ can be obtained by arcsine transform on $\lambda \xi_{\max}$:

$$\alpha(t_0) = arc\sin(\lambda \xi_{\max}) \tag{7}$$

, where $\lambda$ is the wavelength, $\xi_{\max}$ is the frequency at the amplitude maximum in the frequency domain after the interpolation, that is, the frequency-domain parameter value maximizing $\Gamma(\xi)$.

In an embodiment, the step of frequency-domain interpolation may be implemented by zero padding the time domain before Fourier transform, or by reducing a frequency-domain interval during Fourier transform. At present, frequency-domain interpolation algorithms prevail; in a realistic application, this step can be implemented with various frequency-domain interpolation algorithms, and no limitation is given herein.

Hereinafter, the range of the DOA that can be obtained by the method of the embodiments of the disclosure is analyzed.

In the method of the embodiments of the disclosure, in principle, Fourier transform is performed after the echo data are pulse compressed; since the signal $\Gamma(\xi)$ obtained after Fourier transform is a periodic signal in the frequency domain, the DOA that can be obtained is limited to a definite range; According to formula (5), the range of the sine of the off-boresight angle of the DOA is as follows:

$$\left| \sin[\alpha(t_0)] \right| \leq \frac{\lambda}{2d} \tag{8}$$

, where $\lambda$ is the wavelength, and $d$ is a spacing between two adjacent receiving channels.

Thus, the absolute value of the off-boresight angle of the DOA must be less than $arc\sin\left(\dfrac{\lambda}{2d}\right)$, which actually limits the range of a swath, and is consistent with a condition of no grating lobe in the swath.

Thus, with the solution of the embodiments of the disclosure, a resulting DOA can be limited to a definite range, which will directly limit the range of the swath, allowing a more accurate DOA detection, as with an overly wide swath, the range of the DOA will exceed the system detection scope, leading to a large error in DOA detection.

Further, an embodiment of the disclosure also provides a method for performing Digital Beam Forming (DBF) according to the DOA obtained as described. This method includes steps as follows.

First, a weight $\hat{w}_n(t)$ of a current range gate of each channel is acquired according to the DOA obtained in Step 103, with

$$\widehat{w}_n(t) = \exp[-2\pi d_n \xi_m]$$

(9)

, where $d_n$ is the position of the nth receiver with respect to the transmitter, the absolute value of $d_n$ being equal to the distance between the nth receiver and the transmitter, and $\xi_{max}$ is the frequency at the amplitude maximum in the frequency domain after the interpolation;

then, the weight of the current range gate of each channel is put into the signal $\hat{g}_n(\tau,t)$ obtained in formula (1), and weighted summation is performed to obtain a signal formed after the DBF

$$G(\tau,t) = \sum_{n=1}^{N} \widehat{w}_n(t) \cdot \widehat{g}_n(\tau,t)$$

(10)

, where $\tau$ is the azimuth slow time, $t$ is the range fast time.

With this method, an embodiment of the disclosure can detect the DOA, acquire DBF weight, and form a digital beam.

In order to implement an aforementioned method, an embodiment of the disclosure also provides a device for DOA detection; as shown in Fig.2, the device includes: a pulse compression module 21, a Fourier transform module 22, an interpolation module 23 and a DOA acquisition module 24.

The pulse compression module 21 is configured to perform range pulse compression on echo data obtained by each channel in elevation to obtain a compressed signal.

The Fourier transform module 22 is configured to perform Fourier transform on the compressed signal along the channel on each range gate.

The interpolation module 23 is configured to interpolate a result obtained after the Fourier transform.

The DOA acquisition module 24 is configured to acquire a frequency at an amplitude maximum in a frequency domain after the interpolation, and to acquire a DOA according to the frequency.

In an embodiment, a signal $\hat{g}_n(\tau,t)$ obtained after the pulse compression module 21 in the device performs range pulse compression on the echo data obtained by each channel in elevation is as shown in formula (1).

In an embodiment, the Fourier transform module 22 may perform Fourier transform on the compressed signal along the channel on each range gate as follows:

a common term of channels is deleted on a fixed range gate, such that an N-dimensional vector $v(n)$, specifically as expressed in formula (2), may be obtained;

and the N-dimensional vector $v(n)$ is transformed into the frequency domain through Fourier transform to obtain result $\Gamma(\xi)$ as shown in formula (3).

In an embodiment, the interpolation module 23 may interpolate the result obtained after the Fourier transform by zero padding the time domain before Fourier transform, or by reducing a frequency-domain interval during Fourier transform. At present, frequency-domain interpolation algorithms prevail; in a realistic application, this step can be implemented with various frequency-domain interpolation algorithms, and no limitation is given herein.

In an embodiment, the DOA acquisition module 24 may acquire the frequency at the amplitude maximum in the frequency domain after the interpolation and acquire a DOA according to the frequency as follows:

after the frequency-domain result obtained after Fourier transform is interpolated, the frequency maximizing the amplitude in the frequency domain is acquired; and the receiving direction $\alpha(t_0)$ maximizing a receiving gain, namely, the DOA, is acquired according to the frequency, where $\alpha(t_0)$ is as shown in formula (7).

In order to implement DBF after obtaining a DOA, the device may further include a weight acquisition module 25 and a beam forming module 26.

The weight acquisition module 25 is configured to acquire a weight of a current range gate of each channel according to the DOA.

The beam forming module 26 is configured to perform weighted summation on the echo data of each channel with the weight of the current range gate of each channel to obtain a signal formed after the DBF.

In an embodiment, the weight acquisition module 25 may acquire the weight of the current range gate of each channel according to the DOA as follows:

A weight $\hat{w}_n(t)$ of a current range gate of each channel is acquired according to the obtained DOA, specifically as shown in formula (9).

In an embodiment, the beam forming module 26 may perform weighted summation on the echo data of each channel with the weight of the current range gate of each channel to obtain the signal formed after the DBF as follows:

weighted summation is performed on $\hat{g}_n(\tau,t)$ with the weight $\hat{w}_n(t)$ of each channel to obtain a signal $G(\tau,t)$ formed after the DBF, as shown in formula (10).

The technical effect of the embodiments of the disclosure is described below through results of simulation experiments under three conditions.

Experiment 1

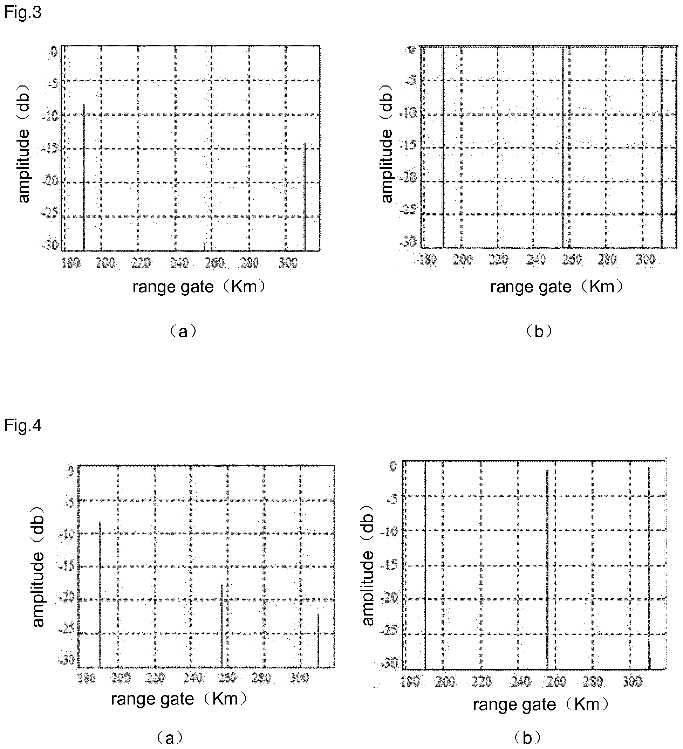

Assume that there is only one point target on each range gate (of three range gates for example) in a swath, and each target is located at a different topographic heights, in which case slant ranges of the range gates are 556Km, 584Km and 612Km respectively, and ground ranges are 190Km, 256Km and 310Km respectively. Fig.3 (b) shows a signal obtained by weighted formation according to a new weight obtained according to the DOA obtained by the method of an embodiment of the disclosure; Fig.3 (a) shows a signal obtained via direct DBF without acquiring the DOA. It can be seen from Fig.3 that, compared with the result obtained via direct DBF without acquiring the DOA, with the method of an embodiment of the disclosure, there can be a remarkable increase in a receiving gain on each range gate.

Experiment 2

Assume that there are multiple point targets on each range gate (of three range gates for example) in a swath, and each of the point targets is located at a different topographic heights, where parameters such as the topographic heights, slant ranges and ground ranges of each point target are as shown in Table 1.

Table 1

| Target | Topographic height | Slant range | ground range |
|--------|--------------------|-------------|--------------|
| P1 | 2000m | 556Km | 190Km |
| P2 | 4000m | 584Km | 256Km |
| P21 | 0m | 584Km | 256Km |
| P22 | 3000m | 584Km | 256Km |
| P3 | 6000m | 612Km | 310Km |
| P31 | 1000m | 612Km | 310Km |

Fig.4 (b) shows a signal obtained via weighted formation with a new weight obtained according to a DOA obtained by the method of an embodiment of the disclosure; Fig.4(a) shows a signal obtained via direct DBF without acquiring the DOA. It can be seen from Fig.4 that with the disclosure, a gain loss caused by differences in topographic heights can still be overcome effectively even when there are multiple targets on the same range gate.

Experiment 3

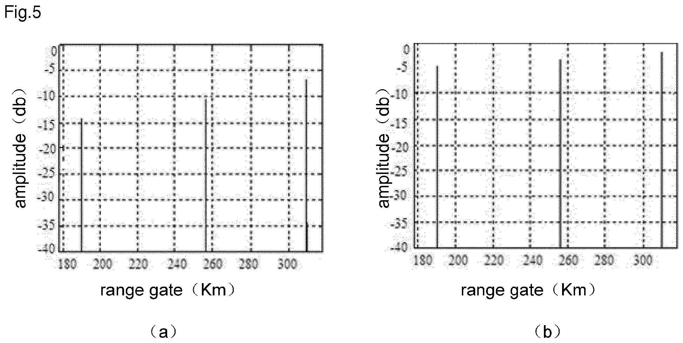

Point targets distributed at different azimuth positions are added; multiple point targets evenly distribute on each range gate, the targets being located at different azimuth positions and topographic heights; 500 point targets are arranged on each range gate and the topographic heights of the point targets distribute evenly between 0 and 6000m; and the point targets distribute evenly in the range exposed to irradiation of an antenna beam in azimuth direction. The simulated result is as shown in Fig.5. Fig.5 (a) shows the result of original DBF. Fig.5 (b) shows the result of DBF after detecting the DOA according to an embodiment of the disclosure. it may be seen from Fig.5 that the solution of an embodiment of the disclosure still has a very strong applicability when targets at different azimuth positions are taken into consideration.

It may be seen from the experiments and simulated results that with the solution of the embodiments of the disclosure, it is possible not only to acquire a DOA accurately and quickly but also to effectively overcome an error in DOA detection caused by a topographic height; by performing DBF after updating a weight using a detected DOA, impact of a topographic height on a DBF result can be overcome.

What describe are merely embodiments of the disclosure, and are not intended to limit the scope of protection of the disclosure.

**Claims**

1. A method for detecting a Direction of Arrival, DOA, of an echo in a Synthetic the Aperture Radar, SAR, comprising the steps of:

   performing (101) range pulse compression on echo data obtained by each channel of the SAR in elevation to obtain a compressed SAR signal;
   performing (102) Fourier transform on the compressed SAR signal along the channel on each range gate;
   interpolating (103) a result obtained after the Fourier transform with a frequency-domain interpolation algorithm;
   acquiring (103) a frequency at an amplitude maximum in a frequency domain after the interpolation; and
   acquiring (103) the DOA according to the frequency,
   wherein the compressed SAR signal is $\hat{g}_n(\tau,t)$, with

   $$\hat{g}_n(\tau,t) = \sigma p_r(t-t_0)\exp\left[-j\frac{4\pi}{\lambda}R_T(\tau)\right]\exp\left[j\frac{2\pi}{\lambda}d_n\sin\alpha(t_0)\right]$$

   , wherein $\tau$ is an azimuth slow time; $t$ is a range fast time; $\sigma$ is a backscattering coefficient of a target; $p_r(t-t_0)$ is a point target SAR signal envelope after pulse compression; $t_0$ is a two-way delay of the echo; $R_T(\tau)$ is an instantaneous slant range from a transmitter to the target; $\alpha(t_0)$ is the off-boresight angle of the DOA; $d_n$ is a position of an nth receiver with respect to the transmitter, an absolute value of $d_n$ being equal to a distance between the nth receiver and the transmitter; $\lambda$ is a wavelength of the echo,
   wherein the step of performing (102) Fourier transform on the compressed SAR signal along the channel on each range gate comprises:

   deleting, on a fixed range gate, a common term of channels of the SAR to obtain an N-dimensional vector $v(n)$, with

   $$v(n) = \exp\left[j\frac{2\pi}{\lambda}d_n\sin\alpha(t_0)\right];$$

   and transforming the $v(n)$ into the frequency domain to obtain the result $\Gamma(\xi)$, with

   $$\Gamma(\xi) = \int_0^{L_E}\exp\left\{j2\pi\frac{\sin[\alpha(t_0)]}{\lambda}d_n\right\}\exp[-j2\pi\xi d_n]d(d_n) = \operatorname{sinc}\left\{L_E\left[\xi - \frac{\sin[\alpha(t_0)]}{\lambda}\right]\right\}\exp[-j\pi\xi L_E]$$

   , wherein $L_E$ is an azimuth antenna length; $\xi$ is a frequency-domain parameter, wherein the step of acquiring (103) the DOA according to the frequency is:

   acquiring the off-boresight angle $\alpha(t_0)$, with $\alpha(t_0)=arc\sin(\lambda\xi_{max})$, wherein $\xi_{max}$ is the frequency at the amplitude maximum in the frequency domain after the interpolation.

2. The method according to claim 1, wherein the frequency at the amplitude maximum in the frequency domain after the interpolation is $\xi_{max}$, with $\xi_{max} = \dfrac{\sin[\alpha(t_0)]}{\lambda}$.

3. The method according to claim 1, wherein a frequency range of $\Gamma(\xi)$ is: $\xi \in \left[-\dfrac{1}{2d},\dfrac{1}{2d}\right]$, wherein $d$ is a spacing between two adjacent receiving channels of the SAR.

4. The method according to claim 1, wherein an absolute value of the off-boresight angle of the DOA is less than $arc\sin\left(\dfrac{\lambda}{2d}\right)$, wherein $d$ is a spacing between two adjacent receiving channels of the SAR.

5. The method according to claim 1, further comprising: acquiring a weight $\hat{w}_n(t)$ of a current range gate of each channel of the SAR according to the off-boresight angle of the DOA, with

$$\widehat{w}_n(t) = \exp\left[-2\pi d_n \xi_{\max}\right]$$

, wherein $d_n$ is a position of an nth receiver with respect to a transmitter, an absolute value of $d_n$ being equal to a distance between the nth receiver and the transmitter, and $\xi_{\max}$ is the frequency at the amplitude maximum in the frequency domain after the interpolation; and performing digital beam forming, DBF, according to the weight $\hat{w}_n(t)$.

6. The method according to claim 5, wherein the step of performing DBF according to the weight $\hat{w}_n(t)$ is:

   performing weighted summation on the compressed SAR signal $\hat{g}_n(\tau,t)$ with the weight $\hat{w}_n(t)$ of each channel of the SAR, to obtain a SAR signal $G(\tau,t)$ formed after the DBF, with

$$G(\tau,t) = \sum_{n=1}^{N} \widehat{w}_n(t) \cdot \widehat{g}_n(\tau,t)$$

   , wherein $\tau$ is an azimuth slow time, $t$ is a range fast time.

7. A device for detecting a Direction of Arrival, DOA, of an echo in a Synthetic Aperture Radar, SAR, comprising: a pulse compression module (21), a Fourier transform module (22), an interpolation module (23) and a DOA acquisition module (24), **characterized in that**
   the pulse compression module (21) is configured to perform range pulse compression on echo data obtained by each channel of the SAR in elevation to obtain a compressed SAR signal;
   the Fourier transform module (22) is configured to perform Fourier transform on the compressed SAR signal along the channel on each range gate;
   the interpolation module (23) is configured to interpolate a result obtained after the Fourier transform with a frequency-domain interpolation algorithm; and
   the DOA acquisition module (24) is configured to acquire a frequency at an amplitude maximum in a frequency domain after the interpolation, and to acquire the DOA according to the frequency,
   wherein the compressed SAR signal is $\hat{g}_n(\tau,t)$, with

$$\widehat{g}_n(\tau,t) = \sigma p_r(t-t_0)\exp\left[-j\frac{4\pi}{\lambda}R_T(\tau)\right]\exp\left[j\frac{2\pi}{\lambda}d_n\sin\alpha(t_0)\right]$$

   , wherein $\tau$ is an azimuth slow time; $t$ is a range fast time; $\sigma$ is a backscattering coefficient of a target; $p_r(t-t_0)$ is a point target SAR signal envelope after pulse compression; $t_0$ is a two-way delay of the echo; $R_T(\tau)$ is an instantaneous slant range from a transmitter to the target; $\alpha(t_0)$ is the off-boresight angle of the DOA; $d_n$ is a position of an nth receiver with respect to the transmitter, an absolute value of $d_n$ being equal to a distance between the nth receiver and the transmitter; $\lambda$ is a wavelength of the echo,
   wherein the Fourier transform module (22) is further configured to:

   delete, on a fixed range gate, a common term of channels of the SAR to obtain an N-dimensional vector $v(n)$, with

$$v(n) = \exp\left[j\frac{2\pi}{\lambda}d_n \sin\alpha(t_0)\right];$$

and

transform the $v(n)$ into the frequency domain to obtain the result $\Gamma(\xi)$, with

$$\Gamma(\xi) = \int_0^{L_E} \exp\left\{j2\pi\frac{\sin[\alpha(t_0)]}{\lambda}d_n\right\}\exp[-j2\pi\xi d_n]d(d_n) = \operatorname{sinc}\left\{L_E\left[\xi - \frac{\sin[\alpha(t_0)]}{\lambda}\right]\right\}\exp[-j\pi\xi L_E]$$

, wherein $L_E$ is an azimuth antenna length; $\xi$ is a frequency-domain parameter, wherein the DOA acquisition module (24) is further configured to:

acquire the off-boresight angle $\alpha(t_0)$, with $\alpha(t) = arc\sin(\tau\xi_{max})$, wherein $\xi_{max}$ is the frequency at the amplitude maximum in the frequency domain after the interpolation.

8. The device according to claim 7, further comprising a weight acquisition module (25), **characterized in that** the weight acquisition module (25) is configured to acquire a weight of a current range gate of each channel of the SAR according to the off-boresight angle of the DOA, with

$$\hat{w}_n(t) = \exp[-2\pi d_n \xi_{max}].$$

9. The device according to claim 8, further comprising a beam forming module (26), **characterized in that** the beam forming module (26) is configured to:

perform weighted summation on the compressed SAR signal $\hat{g}_n(\tau,t)$ with the weight $\hat{w}_n(t)$ of each channel of the SAR, to obtain a SAR signal $G(\tau,t)$ formed after the DBF, with

$$G(\tau,t) = \sum_{n=1}^{N} \hat{w}_n(t) \cdot \hat{g}_n(\tau,t)$$

, wherein $\tau$ is an azimuth slow time, $t$ is a range fast time.


**Patentansprüche**

1. Verfahren zum Erkennen einer Einfallsrichtung, DOA (Direction of Arrival), eines Echos in einem Radar mit synthetischer Apertur, SAR, wobei das Verfahren die folgenden Schritte umfasst:

Durchführen (101) einer Entfernungspulskompression der Echodaten, die durch jeden Kanal der SAR in der Höhe erhalten werden, um ein komprimiertes SAR-Signal zu erhalten;
Durchführen (102) einer Fouriertransformation des komprimierten SAR-Signals entlang des Kanals auf jedem Entfernungstor;
Interpolieren (103) eines Ergebnisses, das nach der Fouriertransformation erhalten wird, mit einem Interpolationsalgorithmus im Frequenzbereich;
nach der Interpolation Erfassen (103) einer Frequenz bei einem Amplitudenmaximum in einem Frequenzbereich; und
Erfassen (103) der DOA entsprechend der Frequenz,
wobei das komprimierte SAR-Signal $\hat{g}_n(\tau,t)$ ist, mit

$$\hat{g}_n(\tau,t) = \sigma p_r(t-t_0)\exp\left[-j\frac{4\pi}{\lambda}R_T(\tau)\right]\exp\left[j\frac{2\pi}{\lambda}d_n\sin\alpha(t_0)\right]$$

, wobei $\tau$ ein langsames Zeitintervall des Azimuts ist; $t$ ein schnelles Zeitintervall der Entfernung ist; $\sigma$ ein Rückstreukoeffizient eines Ziels ist; $p_r(t\text{-}t_0)$ eine Einhüllende eines Punktziel-SAR-Signals nach einer Pulskompression ist; $t_0$ eine Zweiwegeverzögerung des Echos ist; $R_T(\tau)$ eine augenblickliche Schrägentfernung von einem Sender zu dem Ziel ist; $\alpha(t_0)$ der "Off-Boresight-Winkel" (Winkeldifferenz zwischen Mittelachse der Antenne und dem tatsächlichen Seitenwinkel des Ziels) der DOA ist; $d_n$ eine Position eines n-ten Empfängers in Bezug auf den Sender ist, wobei ein absoluter Wert von $d_n$ gleich einem Abstand zwischen dem n-ten Empfänger und dem Sender ist; $\lambda$ eine Wellenlänge des Echos ist,
wobei der Schritt des Durchführens (102) einer Fouriertransformation des komprimierten SAR-Signals entlang des Kanals auf jedem Entfernungstor umfasst:

auf einem festen Entfernungstor Löschen eines gemeinsamen Terms der Kanäle des SAR, um einen N-dimensionalen Vektor $v(n)$ zu erhalten, mit

$$v(n) = \exp\left[j\frac{2\pi}{\lambda}d_n\sin\alpha(t_0)\right];$$

und
Transformation des $v(n)$ in den Frequenzbereich, um das Ergebnis $\Gamma(\xi)$ zu erhalten, mit

$$\Gamma(\xi) = \int_0^{L_E}\exp\left\{j2\pi\frac{\sin[\alpha(t_0)]}{\lambda}d_n\right\}\exp[-j2\pi\xi d_n]d(d_n) = \sin c\left\{L_E\left[\xi - \frac{\sin[\alpha(t_0)]}{\lambda}\right]\right\}\exp[-j\pi\xi L_E]$$

, wobei $L_E$ eine Azimut-Antennenlänge ist; $\xi$ ein Frequenzbereichsparameter ist, wobei der Schritt des Erfassens (103) der DOA entsprechend der Frequenz ist:

Erfassen des Off-Boresight-Winkels $\alpha(t_0)$, mit $\alpha(t_0) = arc\sin(\lambda\xi_{max})$, wobei $\xi_{max}$ die Frequenz an dem Amplitudenmaximum in dem Frequenzbereich nach der Interpolation ist.

2. Verfahren nach Anspruch 1, wobei die Frequenz an dem Amplitudenmaximum in dem Frequenzbereich nach der Interpolation $\xi_{max}$ ist, mit $\xi_{max} = (\sin[\alpha(t_0)])/\lambda$.

3. Verfahren nach Anspruch 1, wobei eine Frequenzentfernung von $\Gamma(\xi)$ ist:

$$\xi \in \left[-\frac{1}{2d}, \frac{1}{2d}\right],$$

wobei $d$ ein Abstand zwischen zwei benachbarten Empfangskanälen des SAR ist.

4. Verfahren nach Anspruch 1, wobei ein absoluter Wert des Off-Boresight-Winkels der DOA kleiner als $arc\sin(\lambda/2d)$ ist, wobei $d$ ein Abstand zwischen zwei benachbarten Empfangskanälen des SAR ist.

5. Verfahren nach Anspruch 1, das ferner umfasst:

Erfassen eines Gewichts $\hat{w}_n(t)$ eines laufenden Entfernungstors jedes Kanals des SAR entsprechend dem Off-Boresight-Winkel des DOA, mit

$$\hat{w}_n(t) = \exp\left[-2\pi d_n \xi_{\max}\right]$$

, wobei $d_n$ eine Position eines n-ten Empfängers in Bezug auf einen Sender ist, wobei ein absoluter Wert von $d_n$ gleich einem Abstand zwischen dem n-ten Empfänger und dem Sender ist, und wobei $\xi_{max}$ die Frequenz an dem Amplitudenmaximum in dem Frequenzbereich nach der Interpolation ist; und
Durchführen einer digitalen Strahlbildung, DBF, entsprechend dem Gewicht $\hat{w}_n(t)$.

6. Verfahren nach Anspruch 5, wobei der Schritt des Durchführens der DBF entsprechend dem Gewicht $\hat{w}_n(t)$ aus Folgendem besteht:

Durchführen einer gewichteten Summation des komprimierten SAR-Signals $\hat{g}_n(\tau,t)$ mit dem Gewicht $\hat{w}_n(t)$ eines jeden Kanals des SAR, um ein SAR-Signal $G(\tau,t)$, das nach der DBF gebildet wird, zu erhalten mit

$$G(\tau,t) = \sum_{n=1}^{N} \hat{w}_n(t) \cdot \hat{g}_n(\tau,t)$$

, wobei $\tau$ ein langsames Zeitintervall des Azimuts ist, $t$ ein schnelles Zeitintervall der Entfernung ist.

7. Vorrichtung zum Erkennen einer Einfallsrichtung, DOA, eines Echos in einem Radar mit synthetischer Apertur, SAR, wobei die Vorrichtung Folgendes umfasst: ein Pulskompressionsmodul (21), ein Modul (22) zur Fouriertransformation, ein Interpolationsmodul (23) und ein DOA-Erfassungsmodul (24), **dadurch gekennzeichnet, dass**
das Pulskompressionsmodul (21) konfiguriert ist, um eine Entfernungspulskompression der Echodaten, die durch jeden Kanal der SAR in der Höhe erhalten werden, durchzuführen, um ein komprimiertes SAR-Signal zu erhalten;
das Modul (22) zur Fouriertransformation konfiguriert ist, um eine Fouriertransformation des komprimierten SAR-Signals entlang des Kanals auf jedem Entfernungstor durchzuführen;
das Interpolationsmodul (23) konfiguriert ist, um ein Ergebnis, das nach der Fouriertransformation erhalten wird, mit einem Interpolationsalgorithmus im Frequenzbereich zu interpolieren; und
das DOA-Erfassungsmodul (24) konfiguriert ist, um nach der Interpolation eine Frequenz bei einem Amplitudenmaximum in einem Frequenzbereich zu erfassen, und um die DOA entsprechend der Frequenz zu erfassen, wobei das komprimierte SAR-Signal $\hat{g}_n(\tau,t)$ ist, mit

$$\hat{g}_n(\tau,t) = \sigma p_r(t - t_0)\exp\left[-j\frac{4\pi}{\lambda}R_T(\tau)\right]\exp\left[j\frac{2\pi}{\lambda}d_n\sin\alpha(t_0)\right]$$

, wobei $\tau$ ein langsames Zeitintervall des Azimuts ist; $t$ ein schnelles Zeitintervall der Entfernung ist; $\sigma$ ein Rückstreukoeffizient eines Ziels ist; $p_r(t-t_0)$ eine Einhüllende eines Punktziel-SAR-Signals nach einer Pulskompression ist; $t_0$ eine Zweiwegeverzögerung des Echos ist; $R_T(\tau)$ eine augenblickliche Schrägentfernung von einem Sender zu dem Ziel ist; $\alpha(t_0)$ der Off-Boresight-Winkel der DOA ist; $d_n$ eine Position eines n-ten Empfängers in Bezug auf den Sender ist, wobei ein absoluter Wert von $d_n$ gleich dem Abstand zwischen dem n-ten Empfänger und dem Sender ist; $\lambda$ eine Wellenlänge des Echos ist,
wobei das Modul (22) zur Fouriertransformation ferner konfiguriert ist, um:

auf einem festen Entfernungstor einen gemeinsamen Term der Kanäle des SAR zu löschen, um einen N-dimensionalen Vektor $v(n)$ zu erhalten, mit

$$v(n) = \exp\left[ j\frac{2\pi}{\lambda} d_n \sin\alpha(t_0) \right] ;$$

und

$v(n)$ in den Frequenzbereich zu transformieren, um das Ergebnis $\Gamma(\xi)$ zu erhalten, mit

$$\Gamma(\xi) = \int_0^{L_E} \exp\left\{ j2\pi \frac{\sin[\alpha(t_0)]}{\lambda} d_n \right\} \exp[-j2\pi\xi d_n] d(d_n) = \operatorname{sinc}\left\{ L_E\left[ \xi - \frac{\sin[\alpha(t_0)]}{\lambda} \right] \right\} \exp[-j\pi\xi L_E]$$

, wobei $L_E$ eine Azimut-Antennenlänge ist; $\xi$ ein Frequenzbereichsparameter ist, wobei das DOA-Erfassungsmodul (24) ferner konfiguriert ist, um:

den Off-Boresight-Winkel $\alpha(t_0)$, mit $\alpha(t_0) = arc\sin(\lambda\xi_{max})$, zu erfassen, wobei $\xi_{max}$ die Frequenz an dem Amplitudenmaximum in dem Frequenzbereich nach der Interpolation ist.

8. Vorrichtung nach Anspruch 7, die ferner ein Gewichtserfassungsmodul (25) umfasst, **dadurch gekennzeichnet, dass**
das Gewichtserfassungsmodul (25) konfiguriert ist, um ein Gewicht eines laufenden Entfernungstors jedes Kanals des SAR entsprechend dem Off-Boresight-Winkel des DOA, mit

$$\hat{w}_n(t) = \exp\left[ -2\pi d_n \xi_{max} \right] ,$$

zu erfassen.

9. Vorrichtung nach Anspruch 8, die ferner ein Strahlbildungsmodul (26) umfasst, **dadurch gekennzeichnet, dass**
das Strahlbildungsmodul (26) konfiguriert ist, um:

eine gewichtete Summation auf dem komprimierten SAR-Signal $\hat{g}_n(\tau,t)$ mit dem Gewicht $\hat{w}_n(t)$ eines jeden Kanals des SAR durchzuführen, um ein SAR-Signal $G(\tau,t)$, das nach der DBF gebildet wird, zu erhalten, mit

$$G(\tau,t) = \sum_{n=1}^{N} \hat{w}_n(t) \cdot \hat{g}_n(\tau,t)$$

, wobei $\tau$ ein langsames Zeitintervall des Azimuts ist, $t$ ein schnelles Zeitintervall der Entfernung ist.

**Revendications**

1. Procédé de détection d'une direction d'arrivée DOA d'un écho dans un radar à ouverture synthétique RSO, comprenant les étapes suivantes :

réalisation (101) d'une compression d'impulsion de plage sur les données d'écho obtenues par chaque canal du RSO en élévation pour obtenir un signal RSO ;
réalisation (102) d'une transformation Fourier sur le signal RSO compressé le long du canal sur chaque grille de plage ;
interpolation (103) d'un résultat obtenu après la transformation Fourier avec un algorithme d'interpolation de domaine de fréquence ;

acquisition (103) d'une fréquence à un maximum d'amplitude dans un domaine de fréquence après l'interpolation ; et

acquisition (103) du DOA en fonction de la fréquence, le signal RSO compressé étant $\hat{g}_n(\tau,t)$, sachant que

$$\hat{g}_n(\tau,t) = \sigma p_r(t-t_0)\exp\left[-j\frac{4\pi}{\lambda}R_T(\tau)\right]\exp\left[j\frac{2\pi}{\lambda}d_n\sin\alpha(t_0)\right]$$

$\tau$ étant un temps lent azimutal ; $t$ étant un temps rapide de plage ; $\delta$ étant un coefficient de rétrodiffusion d'une cible ; $pr(t-to)$ étant une enveloppe de signal RSO de cible de point après compression des impulsions ; $t_o$ étant un retard dans les deux sens de l'écho ; $R_T(\tau)$ étant une distance oblique instantanée entre un transmetteur et la cible ; $\alpha(to)$ étant l'angle d'axe de pointage du DOA ; $d_n$ étant une position d'un énième récepteur par rapport au transmetteur, une valeur absolue de $d_n$ étant égale à une distance entre le énième récepteur et le transmetteur ; $\lambda$ étant une longueur d'onde de l'écho,

l'étape de réalisation (102) de la transformation Fourier sur le signal RSO compressé le long du canal sur chaque grille de plage comprenant :

l'effacement sur une grille de plage fixe d'un terme commun de canaux du RSO pour obtenir un vecteur N-dimensionnel $V(n)$, sachant que

$$v(n) = \exp\left[j\frac{2\pi}{\lambda}d_n\sin\alpha(t_0)\right];$$

et
la transformation du $V(n)$ en domaine de fréquence pour obtenir le résultat $\Gamma(\xi)$, sachant que

$$\Gamma(\xi) = \int_0^{L_E}\exp\left\{j2\pi\frac{\sin[\alpha(t_0)]}{\lambda}d_n\right\}\exp[-j2\pi\xi d_n]d(d_n) = \mathrm{sinc}\left\{L_E\left[\xi - \frac{\sin[\alpha(t_0)]}{\lambda}\right]\right\}\exp[-j\pi\xi L_E]$$

$LE$ étant une longueur d'antenne azimutale ; $\xi$ étant un paramètre de domaine de fréquence, l'étape d'acquisition (103) du DOA en fonction de la fréquence étant :

l'acquisition de l'angle d'axe de pointage $\alpha$ (to), sachant que $\alpha(t_0) = arc\sin(\lambda\xi_{max})$, $\xi_{max}$ étant la fréquence au maximum d'amplitude dans le domaine de fréquence après l'interpolation.

2. Procédé selon la revendication 1, dans lequel la fréquence au maximum d'amplitude dans le domaine de fréquence après l'interpolation est $\xi_{max}$, sachant que $\xi_{max} = (\sin[\alpha(t_0)]) / \lambda$.

3. Procédé selon la revendication 1, dans lequel une plage de fréquence de $\Gamma(\xi)$ est :

$$\xi \in \left[-\frac{1}{2d}, \frac{1}{2d}\right],$$

sachant que $d$ est un espacement entre deux canaux récepteurs adjacents du RSO.

4. Procédé selon la revendication 1, dans lequel une valeur absolue de l'angle d'axe de pointage du DOA est inférieure à $arc\sin(\lambda/2d)$, $d$ étant un espacement entre deux canaux récepteurs adjacents du RSO.

**5.** Procédé selon la revendication 1, comprenant en outre :

l'acquisition d'un poids $w_n(t)$ d'une grille de plage de courant de chaque canal du RSO en fonction de l'angle d'axe de pointage du DOA, sachant que

$$\widehat{w}_n(t) = \exp\left[-2\pi d_n \xi_{\max}\right]$$

$d_n$ étant une position d'un énième récepteur par rapport à un transmetteur, une valeur absolue de $d_n$ étant égale à une distance entre le énième récepteur et le transmetteur et $\xi_{max}$ étant la fréquence au maximum d'amplitude dans le domaine de fréquence après l'interpolation ; et
la réalisation d'un formage de faisceau numérique DBF en fonction du poids $w_n(t)$.

**6.** Procédé selon la revendication 5, dans lequel l'étape de réalisation du DBF en fonction du poids $w_n(t)$ est :

la réalisation d'une totalisation pondérée sur le signal RSO compressé $g_n(\tau, t)$ avec le poids $w_n(t)$ de chaque canal du RSO pour obtenir un signal RSO $G(\tau, t)$ former après le DBF, sachant que

$$G(\tau,t) = \sum_{n=1}^{N} \widehat{w}_n(t) \cdot \widehat{g}_n(\tau,t)$$

$\tau$ étant un temps lent azimutal, $t$ étant un temps rapide de plage.

**7.** Dispositif de détection d'une direction d'arrivée DOA d'un écho dans un radar à ouverture synthétique RSO, comprenant les étapes suivantes :

un module de compression d'impulsion (21), un module de transformation Fourier (22), un module d'interpolation (23) et un module d'acquisition de DOA (24), **caractérisé en ce que**
le module de compression d'impulsion (21) est conçu pour réaliser une compression d'impulsion de plage sur des données d'écho obtenues par chaque canal du RSO en élévation pour obtenir un signal RSO compressé ;
le module de transformation Fourier (22) est conçu pour réaliser une transformation Fourier sur le signal RSO compressé le long du canal sur chaque grille de plage :

le module d'interpolation (23) est conçu pour interpoler un résultat tenu après la transformation Fourier avec un algorithme d'interpolation domaine de fréquence ;
le module d'acquisition de DOA (24) est conçu pour acquérir une fréquence à un maximum d'amplitude dans un domaine de fréquence après l'interpolation et pour acquérir le DOA en fonction de la fréquence, le signal RSO compressé étant (FORMEL EINFÜGEN), sachant que

$$\widehat{g}_n(\tau,t) = \sigma p_r(t - t_0)\exp\left[-j\frac{4\pi}{\lambda}R_T(\tau)\right]\exp\left[j\frac{2\pi}{\lambda}d_n \sin \alpha(t_0)\right]$$

$\tau$ étant un temps lent azimutal ; $t$ étant un temps rapide de plage ; $\delta$ étant un coefficient de rétrodiffusion d'une cible ; $pr(t - to)$ étant une enveloppe de signal RSO de cible de point après compression des impulsions ; $t_0$ étant un retard dans les deux sens de l'écho ; $R_T(\tau)$ étant une distance oblique instantanée entre un transmetteur et la cible ; $\alpha(to)$ étant l'angle d'axe de pointage du DOA ; $d_n$ étant une position d'un énième récepteur par rapport au transmetteur, une valeur absolue de $d_n$ étant égale à une distance entre le énième récepteur et le transmetteur ; $\lambda$ étant une longueur d'onde de l'écho, le module de transformation Fourier (22) étant en outre conçu pour :

effacer sur une grille de plage fixe un terme commun de canaux du RSO pour obtenir un vecteur N-dimensionnel $V(n)$, sachant que

$$v(n) = \exp\left[ j\frac{2\pi}{\lambda} d_n \sin\alpha(t_0) \right];$$

et

transformer le $V(n)$ en domaine de fréquence pour obtenir le résultat $\Gamma(\xi)$, sachant que

$$\Gamma(\xi) = \int_0^{L_E} \exp\left\{ j2\pi\frac{\sin[\alpha(t_0)]}{\lambda} d_n \right\} \exp[-j2\pi\xi d_n] d(d_n) = \operatorname{sinc}\left\{ L_E\left[ \xi - \frac{\sin[\alpha(t_0)]}{\lambda} \right] \right\} \exp[-j\pi\xi L_E]$$

$l_E$ étant une longueur d'antenne azimutale ; $\xi$ étant un paramètre de domaine de fréquence, le module d'acquisition du DOA (24) étant en outre conçu pour :

acquérir l'angle d'axe de pointage $\alpha(t_0)$, sachant que $\alpha(t_0) = arc\sin(\lambda\xi_{max})$, $\xi_{max}$ étant la fréquence au maximum d'amplitude dans le domaine de fréquence après l'interpolation.

**8.** Dispositif selon la revendication 7, comprenant en outre un module d'acquisition de poids (25), **caractérisé en ce que** le module d'acquisition de poids (25) est conçu pour acquérir un poids d'une grille de plage de courant de chaque canal du RSO en fonction de l'angle d'axe de pointage du DOA, sachant que

$$\widehat{w}_n(t) = \exp\left[ -2\pi d_n \xi_{max} \right].$$

**9.** Dispositif selon la revendication 8, comprenant en outre un module de formage de faisceau (26), **caractérisé en ce que** le module de formage de faisceau (26) est conçu pour :

réaliser une totalisation pondérée sur le signal RSO compressé $g_n(\tau, t)$ avec le poids $w_n(t)$ de chaque canal du RSO pour obtenir un signal $G(\tau, t)$ formé après le DBF, sachant que

$$G(\tau,t) = \sum_{n=1}^{N} \widehat{w}_n(t) \cdot \widehat{g}_n(\tau,t)$$

$\tau$ étant un temps lent azimutal, $t$ étant un temps rapide de plage.

Fig.1

> **101:** range pulse compression is performed on echo data obtained by each channel in elevation to obtain a compressed signal

> **102:** Fourier transform is performed on the compressed signal along the channel on each range gate

> **103:** a result obtained after the Fourier transform is interpolated; a frequency at an amplitude maximum in a frequency domain after the interpolation is acquired; and a DOA is acquired according to the frequency

Fig.2

> pulse compression module 21 → Fourier transform module 22 → interpolation module 23

> DOA acquisition module 24

> weight acquisition module 25

> beam forming module 26

Fig.3

(a)

(b)

Fig.4

(a)

(b)

Fig.5

range gate（Km）

（a）

range gate（Km）

（b）

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Adaptive scan-on-receive based on spatial spectral estimation for high-resolution, wide-swath Synthetic Aperture Radar. **BORDONI F.** Geoscience and Remote Sensing Symposium, 2009 IEEE International, IGARSS 2009. IEEE, 12 July 2009, I-64-I-67
- PERFORMANCE INVESTIGATION ON SCAN-ON-RECEIVE AND ADAPTIVE DIGITAL BEAM-FORMING FOR HIGH-RESOLUTION WIDE-SWATH SYNTHETIC APERTURE RADAR. **F BORDONI.** 2009 International ITG Workshop on Smart Antennas - WSA 2009. 01 February 2009, 114-121
- **FAN FENG.** An Improved Scheme of Digital Beam-forming on Elevation for Spaceborne SAR. *JOURNAL OF ELECTRONICS & INFORMATION TECHNOLOGY,* 13 July 2011, vol. 33 (6), 1465-1470